# EUROPÄISCHE PATENTSCHRIFT

(11) **EP 2 190 621 B1**
(45) Veröffentlichungstag und Bekanntmachung des Hinweises auf die Patenterteilung: **22.01.2014**
(21) Anmeldenummer: 07802263.9
(22) Anmeldetag: 11.09.2007
(51) Int. Cl.: B23K 26/42

(54) **STRAHLFANGVORRICHTUNG FÜR EINE BEARBEITUNGSMASCHINE**
STREAM TRAPPING DEVICE FOR A MACHINE TOOL
DISPOSITIF D'INTERCEPTION DE FAISCEAU POUR MACHINE D'USINAGE

(43) Veröffentlichungstag der Anmeldung: 02.06.2010
(73) Patentinhaber: TRUMPF Werkzeugmaschinen GmbH + Co. KG, 71254 Ditzingen (DE)
(72) Erfinder: STEGEMANN, Carsten, 45768 Marl (DE); BLASER, Martin, 88267 Vogt (DE)
(74) Vertreter: Maser, Jochen
(86) Internationale Anmeldenummer: PCT/EP2007/007908
(87) Internationale Veröffentlichungsnummer: WO 2009/033497

(56) Entgegenhaltungen:
- WO-A-94/23884
- WO-A-2007/028402
- WO-A-2007/028403
- WO-A-2007/028404

## Beschreibung

Die Erfindung betrifft eine Strahlfangvorrichtung für eine Bearbeitungsmaschine gemäß dem Oberbegriff des Anspruchs 1.

Aus der WO 2007/028403 Al ist eine Strahlfangvorrichtung für eine Bearbeitungsmaschine bekannt geworden, welche ein Gehäuse mit einer zum Schneidstrahl weisenden linienförmigen Öffnung aufweist. Der aus einer Unterseite eines Werkstücks austretende Schneidstrahl tritt durch die Öffnung in das Gehäuse ein. In dem Gehäuse ist ein umlaufendes Band zur Energieabsorption des Schneidstrahles vorgesehen. Durch dieses umlaufende Band im Gehäuse wird ein Abtransport von Abbrand, Schlacke, Staub und zusätzlich mitgeführter Energie ermöglicht. Durch das umlaufende Band wird auch eine fortwährende Energieabsorption des in die Öffnung des Gehäuses eintretenden Schneidstrahles ermöglicht.

Solche Strahlfangvorrichtungen werden zunehmend einer hohen Beanspruchung ausgesetzt. Beispielsweise werden die Leistungen des Schneidstrahles erhöht, um dickere Werkstücke zu schneiden. Dadurch erfolgt ein verstärkter Wärmeeintrag in die Strahlfangvorrichtung sowie ein erhöhter Anfall von Schlacke, Staub und Abbrand.

Der Erfindung liegt deshalb die Aufgabe zugrunde, eine Strahlfangvorrichtung für solche Bearbeitungsmaschinen weiterzubilden, die den erhöhten Anforderungen zur Bearbeitung von Werkstücken mit einem Schneidstrahl genügen.

Diese Aufgabe wird erfindungsgemäß durch die Merkmale des Anspruchs 1 gelöst. Weitere vorteilhafte Ausgestaltungen und Weiterbildungen der Erfindung sind in den weiteren Ansprüchen angegeben.

Durch die erfindungsgemäße Ausgestaltung der Strahlfangvorrichtung, bei der zumindest ein Rotationskörper in dem Gehäuse unterhalb der Öffnung angeordnet ist, wird eine erhöhte Energieabsorption des Schneidstrahles erzielt. Durch diesen Rotationskörper wird eine über den Umfang erfolgende linienförmige Energieabsorption als auch Umlenkung oder Ablenkung von Schlacke, Funken und Bearbeitungsgasen gegenüber der Eintrittsrichtung des Schneidstrahles erzielt.

Nach einer bevorzugten Ausgestaltung der Erfindung ist vorgesehen, dass der zumindest eine Rotationskörper um seine Rotationsachse drehangetrieben ist. Dadurch kann eine linienförmige Energieabsorption in Umfangsrichtung des Rotationskörpers für eine gute Aufnahme der Energie bzw. Ableitung der Wärme erfolgen.

Nach einer weiteren bevorzugten Ausgestaltung der Erfindung ist vorgesehen, dass der zumindest eine Rotationskörper längs seiner Rotationsachse hin und her verfahrbar ist. Auch durch diese translatorische Bewegung des Rotationskörpers kann eine Energieabsorption ermöglicht werden. Alternativ kann auch vorgesehen sein, dass der Drehbewegung des Rotationskörpers um seine Rotationsachse die translatorische Bewegung längs der Rotationsachse überlagert wird.

Nach einer bevorzugten Ausgestaltung der Strahlfangvorrichtung ist vorgesehen, dass der Rotationskörper als Walze ausgebildet ist, der sich insbesondere zumindest entlang der Länge der Öffnung des Gehäuses erstreckt. Dadurch kann eine konstruktiv einfache Ausgestaltung ermöglicht werden, indem bspw. eine Walze an den jeweiligen Stirnseiten des Gehäuses gelagert ist und eine äußere Mantelfläche der Walze den in die Öffnung eintretenden Schneidstrahl kreuzt.

Der Rotationskörper ist bevorzugt zu dem in die Öffnung des Gehäuses eintretenden Schneidstrahl außermittig angeordnet. Dadurch wird eine gezielte Umlenkung bzw. Ablenkung von Funken, Schlacke und Abbrand ermöglicht, so dass eine Rückrefflektion der Funken, der Schlacke und des Abbrandes in Richtung auf die Öffnung bzw. zur Unterseite des bearbeiteten Werkstückes verhindert ist.

Nach einer weiteren bevorzugten Ausgestaltung der Erfindung ist vorgesehen, dass der zumindest eine Rotationskörper in dem Gehäuse in seiner außenmittigen Position veränderbar und zumindest in X-Richtung verfahrbar ist. Dadurch kann der Rotationskörper hinsichtlich der außermittigen Position zur Öffnung des Gehäuses eingestellt werden. Zusätzlich zur Verschiebebewegung des Rotationskörpers in X-Richtung kann auch eine Verschiebebewegung in Y-Richtung und/oder in Z-Richtung des Rotationskörpers im Gehäuse vorgesehen sein, um den Rotationskörper in seiner Lage innerhalb des Gehäuses bzw. zur Öffnung des Gehäuses oder des eintretenden Scheidstrahles einzustellen. Des Weiteren kann durch die Einstellung der Lage innerhalb des Gehäuses im Hinblick auf den einfallenden Schneidstrahl eine Aufweitung der reflektierten Strahlung erzielt werden, um dadurch eine große Streubreite der reflektierten Strahlung mit erheblich reduzierter Energiedichte zu erzielen.

Nach einer weiteren bevorzugten Ausgestaltung des Rotationskörpers ist vorgesehen, dass eine Mantelfläche sich zu einer Stirnseite des Rotationskörpers hin konisch verjüngt. Dadurch kann bspw. ein Teileabtransport begünstigt werden. Durch die konische Ausgestaltung wird beim Auftreffen eines Bau- oder Restteils auf den Rotationskörper dieses Teil aufgrund der Konizität in eine vorbestimmte Richtung weitergeleitet. Dadurch kann ein Teileabtransport begünstigt werden.

Nach einer ersten Ausführungsform des Rotationskörpers ist die Walze vorzugsweise aus einem Vollmaterial hergestellt. Dadurch kann die absorbierte Wärme schnell und großvolumige in den Rotationskörperabgeleitet werden.

Nach einer weiteren vorteilhaften Ausgestaltung des Rotationskörpers ist vorgesehen, dass die Walze als Hohlwalze ausgebildet ist und vorzugsweise an zumindest einer Stirnseite ein Anschluss für die Zuführung eines Mediums in die Hohlwalze vorgesehen ist. Dadurch kann eine gewichtsreduzierte Ausgestaltung eines Rotationskörpers erzielt werden. Zusätzlich kann durch den vorzugsweise an zumindest einer Stirnseite vorgesehenen Anschluss insbesondere ein Kühlmedium in den Innenraum der Hohlwalze eingeleitet werden, um eine zusätzliche Kühlung und somit eine verbesserte Energieabsorption zu ermöglichen. Sofern bspw. an jeder Stirnseite der Hohlwalze ein Anschluss für ein Medium vorgesehen ist, kann eine Durchführung des Mediums erfolgen. Bei dem Medium kann es sich um ein gasförmiges oder flüssiges Medium handeln. Insbesondere ist eine Wasserdurchführung vorgesehen.

Eine weitere alternative Ausgestaltung des Rotationskörpers sieht vorteilhafterweise die Ausbildung einer doppelwandigen Walze vor, welche im Zwischenraum zwischen einem Außenrohr und einem Innenrohr mit einem Medium befüllbar ist. Dadurch kann die Energieabsorption und Wärmeableitung erhöht werden. Diese doppelwandige Walze kann bei einem einseitigen Anschluss mit einem Medium befüllt und entleert werden oder bei einem beidseitigen Anschluss an jeder Stirnseite auch durchströmt werden.

Nach einer weiteren alternativen Ausgestaltung der doppelwandigen Walze als Rotationskörper ist vorgesehen, dass an zumindest einer Stirnseite des Innenrohres ein Anschluss für die Zuführung eines Mediums vorgesehen ist. Dadurch kann der Innenraum und der Zwischenraum jeweils mit einem insbesondere unterschiedlichen Medium befüllt oder durchflutet werden, um eine hohe Energie- und Wärmeabsorption zu erzielen.

Nach einer weiteren alternativen Ausgestaltung der doppelwandig ausgebildeten Walze als Rotationskörper ist vorgesehen, dass das Außenrohr und das Innenrohr relativ zueinander drehbar angeordnet sind. Dabei kann gemäß einer ersten Ausführungsform ein feststehendes Innenrohr vorgesehen sein, um welches das Außenrohr rotiert. Dadurch kann eine Verwirbelung des im Zwischenraum zwischen dem Innen- und Außenrohr vorgesehenen Mediums erfolgen, wodurch ein verbesserter Wärmeübergang erzielt wird. Dies ist vorteilhafterweise dann gegeben, wenn im Innenraum des Innenrohres ein weiteres Medium vorgesehen ist, welches vorzugsweise auch ausgetauscht wird. Eine zweite, alternative Ausführungsform sieht vor, dass das Innenrohr in eine Drehbewegung versetzt wird, welche gleichsinnig oder gegensinnig zum Außenrohr drehangetrieben sein kann.

Des Weiteren kann alternativ vorgesehen sein, dass bei einem Rotationskörper, der als doppelwandige Walze ausgebildet ist, ein Innenrohr außermittig zum Außenrohr angeordnet ist. Dadurch kann bei der Rotation des Außenrohres und/oder des Innenrohres eine Zwangumwälzung von einem in dem Zwischenraum zwischen dem Innen- und Außenrohr vorhandenen Medium erfolgen, wodurch eine verbesserte Kühlung erzielt wird.

Nach einer weiteren alternativen Ausgestaltung des Rotationskörpers als doppelwandige Walze ist vorgesehen, dass eine Zwangsführung eines Mediums durch einen Zwischenraum zwischen dem Innen- und Außenrohr und anschließend durch einen Innenraum des Innenrohres erfolgt. Dadurch kann eine gleichmäßige Kühlung der Walze erzielt werden. Bevorzugt ist an einer Stirnseite der Walze der zu- und abführende Anschluss vorgesehen, so dass die Walze im Aufbau vereinfacht ist.

Nach einer weiteren bevorzugten Ausgestaltung der Erfindung ist vorgesehen, dass der Rotationskörper in dem Gehäuse einseitig gelagert ist. Dadurch kann eine Art fliegende Lagerung ermöglicht werden. Der Rotationskörper kann eine als Patrone ausgebildete Kühleinheit, insbesondere mit der Zwangsführung des Mediums aufnehmen, wobei die Kühleinheit in die rohrförmige Walze hineinragt. Die Lagerung der Walze erfolgt an oder außerhalb dem Gehäuse, ebenso wie die Lagerung der Kühleinheit. Dadurch ist die Gefahr von Verschmutzung der Lagerung durch Schlacke, Staub oder Funken verringert oder verhindert.

Nach einer weiteren bevorzugten Ausgestaltung der Erfindung ist vorgesehen, dass der Rotationskörper aus einem gut wärmeleitfähigen Material, insbesondere aus Kupfer oder kupferhaltigen Materialien hergestellt ist. Solche Materialien ermöglichen zum einen eine hohe Wärmeableitung und zum anderen sind diese Materialien schwer mit weiteren Materialien zu verschweißen oder zu verbinden, so dass ein dauerhaftes Anhaften an der Oberfläche des Rotationskörpers erheblich reduziert ist.

Nach einer weiteren bevorzugten Ausgestaltung der Erfindung ist vorgesehen, dass eine äußere Mantelfläche des Rotationskörpers eine bearbeitete, insbesondere aufgeraute Oberfläche aufweist. Dadurch kann ein gezieltes Anhaften der Schlacke erzielt werden, wodurch ein schneller Abtransport ermöglicht ist. Eine Reflektion der Verschmutzungen in Richtung auf die Öffnung des Gehäuses wird dadurch erheblich reduziert, wodurch die Unterseite des zu bearbeitenden Werkstückes durch Funken oder Schlacke nicht beeinträchtigt wird. Durch den rotierend angetriebenen Rotationskörper wird des Weiteren ermöglicht, dass bei größeren anwachsenden Schichtdicken ein selbständiges Lösen durch die Fliehkräfte erzielt wird.

Nach einer weiteren bevorzugten Ausgestaltung der Erfindung ist vorgesehen, dass zum Entfernen von an dem Rotationskörper anhaftender Schlacke, Abbrand und Verunreinigungen eine Reinigungsvorrichtung vorgesehen ist, welche einer äußeren Mantelfläche des zumindest einen Rotationskörpers zugeordnet ist. Dadurch kann einem Zuwachsen oder einem Schichtaufbau von an dem Rotationskörper anhaftender Schlacke, Abbrand oder Verschmutzung entgegengewirkt werden. Darüber hinaus kann durch eine solche Reinigungsvorrichtung bei jeder Umdrehung des Rotationskörpers ein Reinigungsvorgang erfolgen, wodurch auch eine verbesserte Wärmeableitung gegeben ist.

Die Reinigungsvorrichtung ist bevorzugt als Bürste, insbesondere rotierende Bürste, als Schaber, Kratzer oder als rotierende Walze ausgebildet. In Abhängigkeit der Einbauverhältnisse können die einzelnen Reinigungsvorrichtungen vorgesehen sein.

Nach einer weitern bevorzugten Ausgestaltung der Erfindung ist vorgesehen, dass das Gehäuse zumindest eine Absaugöffnung aufweist, an die eine Absaugvorrichtung anschließbar ist und zumindest eine Absaugöffnung seitlich oder am Boden des Gehäuses vorgesehen ist und dass zwischen der Öffnung des Gehäuses und dem Rotationskörper eine Zuführung für ein Medium vorgesehen ist, welches vorzugsweise eine Einströmrichtung aufweist, die quer zur Längserstreckung des zumindest einen Rotationskörper oder der Öffnung des Gehäuses ausgerichtet ist. Durch die an das Gehäuse angeschlossene Absaugvorrichtung können die durch die Öffnung eingedrungenen und aufgrund des Schneidprozesses entstehenden Gase, Funken und Stäube abgesaugt werden. Gleichzeitig kann durch die angeschlossene Absaugung ein Kühleffekt erzielt werden. Zusätzlich können die durch den Rotationskörper umgelenkten Verunreinigungen und Schlackepartikel abgesaugt werden.

Durch eine Zuführung kann gleichzeitig ein gasförmiges oder flüssiges Medium, insbesondere Luft, zugeführt werden, um eine seitlich Ablenkung der von dem Rotationskörper reflektierenden Verunreinigungen, Schlacke und Funken zu erzielen und zusätzlich der Absaugung zuzuführen, so dass eine Rückrefflektion der durch den Schneidstrahl in das Gehäuse eingetragenen Partikel verhindert wird.

Die Zuführung für das Medium erstreckt sich bevorzugt entsprechend der Länge der Öffnung des Gehäuses und ist vorzugsweise segmentweise ansteuerbar. Dadurch wird dasjenige Segment zum Einleiten des Mediums angesteuert, in dessen Bereich sich der Schneidstrahl befindet. Alternativ kann vorgesehen sein, dass in Abhängigkeit der Position des in die Öffnung des Gehäuses eintretenden Schneidstrahls die Zuführung zuschaltbar ist. Dadurch kann der Bereich vor und hinter dem Schneidstrahl in und entgegen der Bewegungsrichtung des Schneidstrahls eingestellt und individuell angepasst werden.

Nach einer weiteren bevorzugten Ausgestaltung der Erfindung ist vorgesehen, dass zumindest seitliche Wandabschnitte im Gehäuse eine Anti-Haftbeschichtung aufweisen. Die durch den Rotationskörper aufgrund dessen Rotationsbewegung umgelenkten Verunreinigungen, Schlacke und Funken werden in Richtung auf die seitlichen Wandabschnitte umgelenkt. Zur Vermeidung von einer Verschmutzung der Seitenwände oder einem Zuwachsen der Seitenwände wird eine Anti-Haftbeschichtung aufgebracht. Darüber hinaus kann ein Reinigungsvorgang, bspw. durch Rütteln des Gehäuses, bereits zum Lösen oder Abplatzen von sich ggf. daran anlagernden Verschmutzungen führen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung einer Bearbeitungsmaschine mit einer erfindungsgemäßen Strahlfangvorrichtung in einer eingebauten Position,
- Figur 2: eine perspektivische Darstellung der erfindungsgemäßen Strahlfangvorrichtung,
- Figur 3: einen schematischen Querschnitt der Strahlfangvorrichtung gemäß Figur 2,
- Figur 4: einen schematischen Längsschnitt der Strahlfangvorrichtung gemäß Figur 2,
- Figur 5a und b: eine schematische Ansicht im Querschnitt und im Längsschnitt eines Rotationskörpers in der Strahlfangvorrichtung gemäß Figur 2,
- Figur 6a und b: eine schematische Ansicht im Querschnitt und im Längsschnitt einer alternativen Ausführungsform des Rotationskörpers gemäß Figur 2,
- Figur 7a und b: eine schematische Ansicht im Querschnitt und im Längsschnitt einer alternativen Ausführungsform des Rotationskörpers gemäß Figur 2 und
- Figur 8: eine schematische Ansicht im Längsschnitt einer alternativen Ausführungsform des Rotationskörpers gemäß Figur 2.

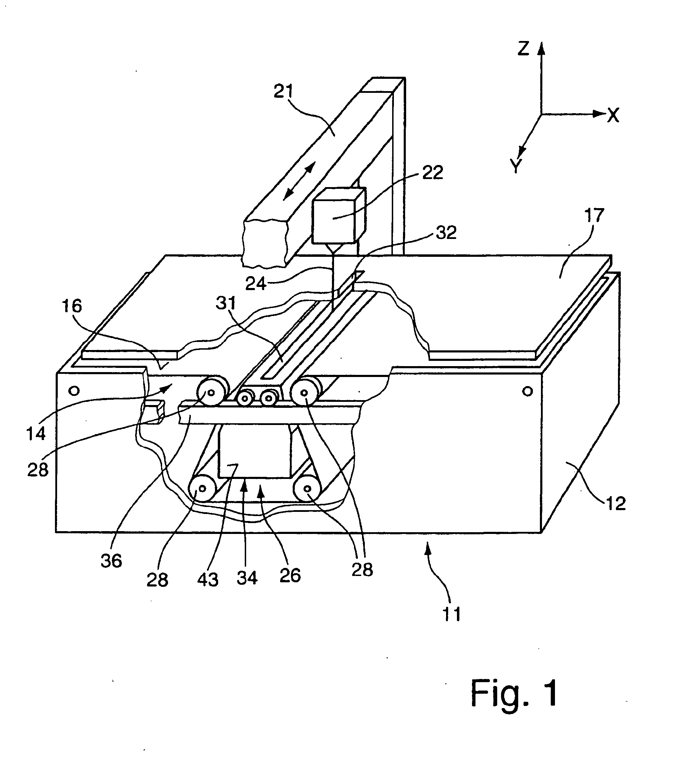

In Figur 1 ist perspektivisch eine Bearbeitungsmaschine 11 dargestellt. Diese Bearbeitungsmaschine 11 ist bevorzugt als Laserschneidmaschine ausgebildet. Alternativ kann eine Bearbeitungsmaschine mit einem Plasma-Strahl oder Brennstrahl vorgesehen sein. Ein Maschinenbett 12 umfasst eine Werkstückauflage 14, die beispielsweise gemäß Figur 1 durch ein Auflageband 16 ausgebildet ist, welches ruhend im Maschinenbett 12 gehalten ist. In einer alternativen Ausführungsform kann dieses Auflageband auch angetrieben sein und zusätzliche Transportfunktionen übernehmen. Über eine Linearachse 21 ist ein Schneidkopf 22 in Y-Richtung bewegbar und bildet einen Arbeitsbereich des Schneidkopfes 22. Zusätzlich kann eine Linearachse vorgesehen sein, die in und entgegen einer X-Richtung verfahrbar ist. Darüber hinaus kann auch eine in der Höhe verfahrbare Linearachse vorgesehen sein. Von dem Schneidkopf 22 aus wird ein Schneidstrahl 24 auf das Werkstück 17 gerichtet, um eine Bearbeitung durchzuführen.

Auf einer Unterseite des Werkstückes 17 ist im Bearbeitungsbereich des Schneidkopfes 22 eine Strahlfangvorrichtung 26 vorgesehen, die zwischen Umlenkrollen 28 des Auflagebandes 16 positioniert ist. Die Strahlfangvorrichtung 26 kann in einer besonderen Ausführungsform auf einer Führung 36 in und entgegen der X-Richtung verfahrbar sein, wobei die Strahlfangvorrichtung 26 an die Bewegung des Schneidkopfes 22 gekoppelt ist, beispielsweise durch einen eigenen Antrieb oder ohne eigenen Antrieb mitgeführt wird.

Die Strahlfangvorrichtung 26 weist eine Öffnung 31 auf, die zum Schneidkopf 22 gerichtet ist und sich bevorzugt entlang des gesamten Bearbeitungsbereiches des Schneidkopfes 22 in Y-Richtung erstreckt. Während der Bearbeitung des Werkstückes 17 kann der Schneidstrahl 24, der auf der Unterseite des Werkstückes 17 nach Einbringung eines Schneidspaltes 32 austritt, durch die Öffnung 31 von einem Gehäuse 34 der Strahlfangvorrichtung 26 aufgefangen werden.

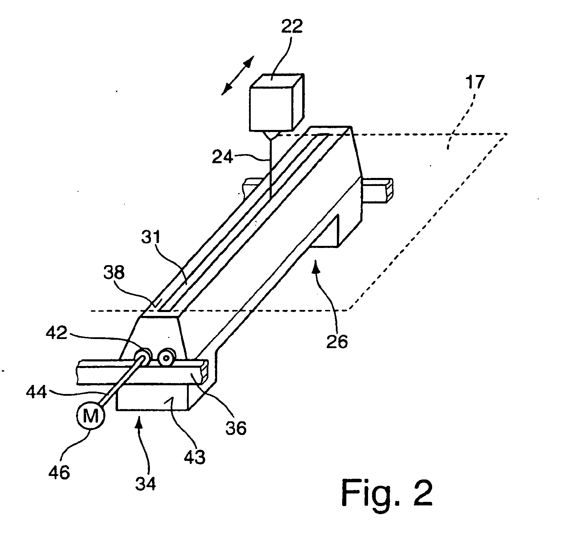

In Figur 2 ist eine perspektivische Ansicht der Strahlfangvorrichtung 26 dargestellt. Diese weist ein im Wesentlichen geschlossenes Gehäuse 34 auf, das an einer zum Werkstück 17 weisenden Stirnfläche 38 die Öffnung 31 umfasst.

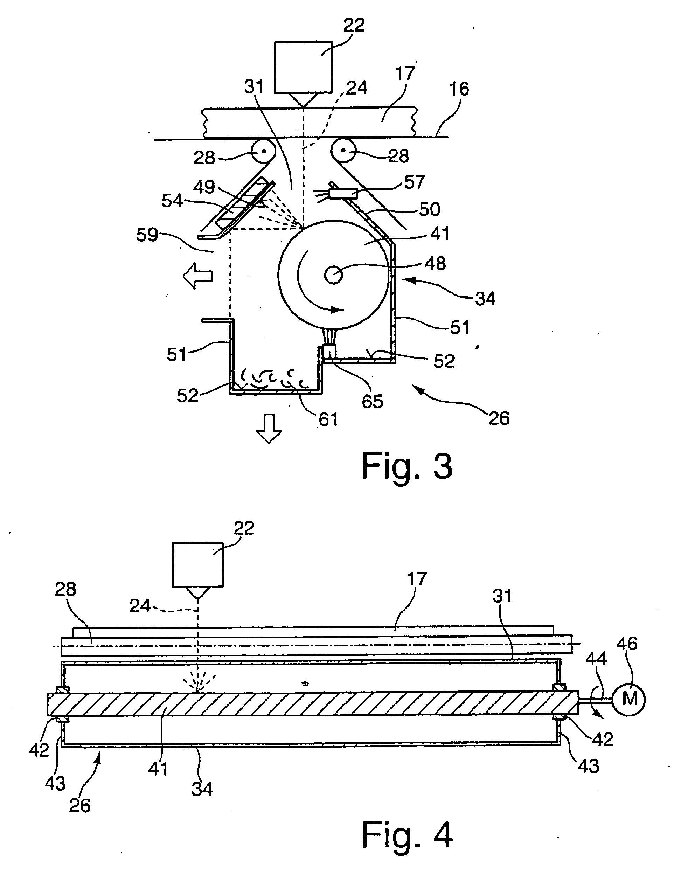

In Figur 3 ist eine schematische Ansicht im Querschnitt der Strahlfangvorrichtung 26 gemäß Figur 2 dargestellt. Figur 4 zeigt die Strahlfangvorrichtung 26 gemäß Figur 2 im Längsschnitt.

Im Gehäuse 34 unterhalb der Öffnung 31 ist ein Rotationskörper 41 angeordnet, der gemäß einer ersten Ausführungsform als Walze ausgebildet ist. Dieser Rotationskörper 41 wird jeweils durch ein Lager 42 (Figur 2) an Stirnseiten 43 des Gehäuses 34 drehbar aufgenommen. An einer Stirnseite 43 ist eine Antriebswelle 44 herausgeführt, welche von einem Antrieb 46 in Drehung versetzt wird.

Der Rotationskörper 41 ist gemäß dem Ausführungsbeispiel in Figur 3 und 4 als kreisrunder Rotationsköper bzw. als Zylinder mit einer kreisrunden Grundfläche ausgebildet. Der Rotationskörper 41 ist beispielsweise als Walze aus einem Vollmaterial oder als Hohlwalze ausgebildet. In dem Gehäuse 34 ist der Rotationskörper 41 außermittig zum Schneidstrahl 24 angeordnet, so dass der Schneidstrahl 24 nicht auf die am nächsten zur Öffnung liegenden Mantelfläche des Rotationskörpers auftritt, um eine Totalrefflektion des einfallenden Schneidstrahls 24 zu vermeiden. Vielmehr wird durch die außermittige Anordnung erzielt, dass durch die Gesetzmäßigkeit, wonach der Eintreffwinkel gleich dem Austrittswinkel ist, eine seitliche Ablenkung des Schneidstrahls 24 und der vom Schneidstrahl 24 durch die Öffnung 31 in das Gehäuse 34 eingetragene Funken, Schlacke und Verschmutzungen ermöglicht. Zusätzlich wird der einfallende Schneidstrahl reflektiert gestreut.

Zur Erhöhung der linienförmigen Energieabsorption wird der Rotationskörper 41 durch den Antrieb 46 in Drehung versetzt. Dadurch wird eine linienförmige Energieabsorption auf der umlaufenden Mantelfläche des Rotationskörpers 41 erzielt. Zusätzlich oder alternativ zur Drehbewegung des Rotationskörpers 41 um seine Rotationsachse 48 kann eine translatorische Bewegung des Rotationskörpers 41 entlang seiner Rotationsachse 48, bzw. in und entgegen der Y-Richtung vorgesehen sein. Des Weiteren kann eine Kombination der Rotationsbewegung um die Rotationsachse 48 und eine translatorische Hin- und Herbewegung entlang der Rotationsachse 48 für die Energieabsorption angesteuert werden.

Durch die Ausgestaltung des Rotationskörpers 41 kann eine robuste sowie einfache und somit kostengünstige Konstruktion für die Energieabsorption, insbesondere im Vergleich zum umlaufenden Band gegenüber dem eingangs genannten Stand der Technik, erzielt werden. Zusätzlich kann ein geringere Lärmbelästigung als auch eine erhöhte Arbeitssicherheit beim Betrieb dieser Strahlfangvorrichtung 26 erzielt werden. Durch die Ausgestaltung eines Rotationskörpers 41 zur Energieabsorption kann eine Aufweitung der reflektierten Strahlungsanteile des Schneidstrahles 24 ermöglicht sein, so dass auf einen zusätzlichen Absorptionskörper wie bspw. eine Strahlfalle verzichtet werden kann. Gleichzeitig wird durch die außermittig auf den Rotationskörper 41 auftreffenden Schneidstrahl 24 nicht nur eine effektivere Einkopplung bzw. Energieabsorption des Schneidstrahles 24 erreicht, sondern auch eine gerichtete Reflektion der nicht absorbierten Strahlungsanteil innerhalb des Gehäuses 34 ermöglicht. Des Weiteren erfolgt über die im Umfang des Rotationskörpers 41 erfolgende linienförmige Energieabsorption eine Erwärmung des Rotationskörpers 41, die nur in Längsrichtung eine Längenänderung bewirkt, welche konstruktiv einfach durch eine beispielsweise Fest-Los-Lagerung aufgenommen werden kann.

Das Gehäuse 34 weist unmittelbar an die Stirnfläche 38 angrenzend Wandabschnitte 49, 50 auf, welche den Innenraum des Gehäuses 34 aufweiten. Daran schließen sich bevorzugt parallel zueinander ausgerichtete Wandabschnitte 51 an, welche in einen Boden 52 übergehen. Durch die außermittige Anordnung des Rotationskörpers 41 wird ein Wandabschnitt 49 verstärkt mit reflektierter Strahlung als auch Schlacke und Schmutz beaufschlagt. Dieser Wandabschnitt 49 ist bevorzugt mit einer Strahl- oder Prallplatte 54 ausgebildet, die insbesondere durch ein Kühlmedium, vorzugsweise Wasser gekühlt ist. Diesem Wandabschnitt 49 gegenüberliegend ist im Wandabschnitt 50 eine Zuführung 57 vorgesehen, welche sich bevorzugt entlang dem Wandabschnitt 50 über die gesamte Gehäuselänge erstreckt.

Die Zuführung 57 besteht bevorzugt aus mehreren Düsen, insbesondere Breitschlitzdüsen, die beispielsweise in einer Reihe nebeneinander positioniert sind, um ein Medium in das Gehäuse 34 einzuleiten. Hierbei kann ein flüssiges oder gasförmiges Medium eingeleitet werden. Bevorzugt wird Luft verwendet. Die Zuführung 57 ist derart ausgerichtet, dass der einfallende Schneidstrahl bzw. die damit durch die Öffnung 31 in das Gehäuse 34 einfallenden Funken, Schlacke und Verunreinigungen abgelenkt und in Richtung auf die Prallplatte 54 umgelenkt werden. Bevorzugt ist unterhalb des Wandabschnittes 49 in dem Wandabschnitt 51 eine Absaugungsöffnung 59 vorgesehen, die von einem Absaugstutzen 60 umgeben ist. An dem beispielhaft in Figur 3 dargestellten Absaugstutzen 60 ist eine nicht näher dargestellte Absaugvorrichtung angeschlossen, wodurch das über die Zuführung 57 eingeleitete Medium abgesaugt wird. Dadurch können Funken, Schlacke und dergleichen, die einerseits durch den Rotationskörper 41 reflektiert und andererseits durch die Zuführung 57, über den Absaugstutzen 60 aus dem Gehäuse 34 abgelenkt werden. Die Rotationsrichtung des Rotationskörpers 41 ist derart vorgesehen, dass die reflektierende Strahlung, Schlacke, Funken und Verunreinigungen in eine entgegengesetzte Richtung gegenüber dem außermittigen Versatz der Rotationsachse 48 zum Schneidstrahl 24 erfolgt.

Am Boden 52 ist eine Auffangwanne 61 für Kleinteile, Schlacke und für weitere Verunreinigungen vorgesehen. Diese Auffangwanne 61 kann bevorzugt perforiert ausgebildet und an die Absaugungsvorrichtung angeschlossen sein, so dass Funken, Schlacke und Verunreinigungen über den Boden 52 abgesaugt werden können.

Zur Reinigung des Rotationskörpers 41 ist eine Reinigungsvorrichtung 65 vorgesehen, welche bevorzugt am Boden 52 oder an einem Wandabschnitt 51 nahe dem Boden 52 angeordnet ist. Im Ausführungsbeispiel ist die Reinigungsvorrichtung 65 als Bürstenleiste ausgebildet, welche an dem rotierenden Rotationskörper 41 angreift. Dadurch wird auf der Mantelfläche des Rotationskörpers 41 anhaftende Schlacke, Funken oder Verunreinigungen entfernt und gelangen in die Auffangwanne 61, um diese anschließend zu entsorgen. Durch eine zusätzliche auf der Mantelfläche des Rotationskörpers 41 aufgebrachte Hochtemperatur-Anti-Haftbeschichtung kann der Ablöseeffekt von der Oberfläche des Rotationskörpers 41 zusätzlich unterstützt werden.

Zur Einstellung der Lage des Rotationskörpers 41 in dem Gehäuse 34 kann eine Verstelleinrichtung zwischen dem Gehäuse 34 und dem Rotationskörper 41 vorgesehen sein, um eine außermittige Position des Rotationskörpers 41 zum in die Öffnung 31 des Gehäuses 34 eintretenden Schneidstrahls 24 einzustellen. Der Rotationskörper 41 ist mit seiner Rotationsachse vorzugsweise parallel verlaufend mit einem Wandabschnitt 51 oder zu einer linienförmigen Öffnung 31 ausgerichtet. Alternativ kann vorgesehen sein, dass die Rotationsachse 48 des Rotationskörpers 41 in einem spitzen Winkel zur Y-Verfahrrichtung des Schneidwinkels ausgerichtet ist. Der Rotationskörper 41 kann darüber hinaus sich zu einer Stirnseite hin konisch verjüngen, wobei die vorbeschriebenen Anordnungen in seiner Lage und Ausrichtung auch für konisch ausgebildete Rotationskörper 41 gilt.

Alternativ zum Rotationskörper 41 gemäß den Figuren 3 und 4, der als Walze ausgebildet ist, welche sich über die gesamte Länge des Gehäuses 34 erstreckt, kann alternativ vorgesehen sein, dass mehrere kürzere Walzen vorgesehen sind, die in einer gemeinsamen Rotationsachse oder versetzt zueinander angeordnet sind, so dass diese im jeweiligen Randbereich ein Überlappungsbereich aufweisen, um ein Durchtreten des Schneidstrahls 24 und Auftreffen auf dem Boden 52 zu vermeiden. Bei mehreren Rotationskörpern 41 ist bevorzugt vorgesehen, dass deren Rotationsachse parallel zur Y-Achse oder in einem spitzen Winkel hierzu verlaufen. Des Weiteren kann alternativ vorgesehen sein, dass mehrere Rotationskörper 41 eine Rotationsachse umfassen, welche in X-Richtung ausgerichtet ist. Auch bei einer solchen Anordnung können die einzelnen Rotationskörper 41 bspw. stehend entlang einer Zickzacklinie einander zugeordnet sein, so dass der Schneidstrahl 24 bei einem Verfahrweg entlang der Y-Achse immer auf einen Rotationskörper 41 auftritt.

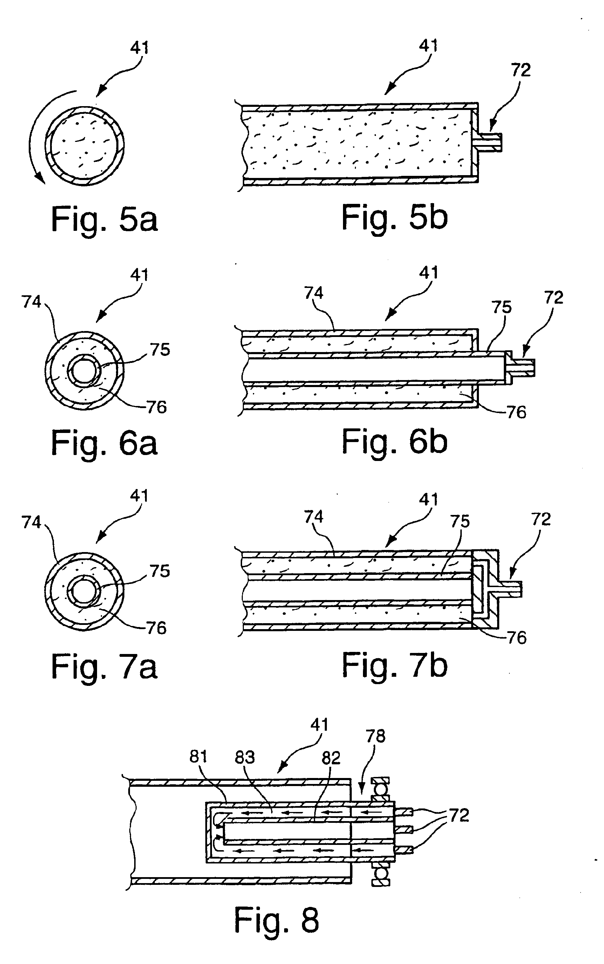

In Figur 5a ist eine schematische Ansicht im Querschnitt und in Figur 5b eine schematische Ansicht im Längsschnitt einer ersten Ausführungsform des Rotationskörpers 41 dargestellt. Bei dieser Ausführungsform ist der Rotationskörper 41 als Rohr oder Hohlwelle ausgebildet, welches an zumindest einer Stirnseite einen Anschluss 72 zum Zuführen eines Mediums aufweist. Beispielsweise wird zur Kühlung Wasser in die Hohlwelle eingefüllt. Bei einem beidseitigen Anschluss kann eine Durchströmung der Hohlwelle mit dem Medium ermöglicht werden. Aufgrund dieser konstruktiven Ausgestaltung, dass der Rotationskörper 41 gekühlt werden kann, wird ein geringer thermischer Verzug der Hohlwelle erzielt. Dadurch steigt auch die Belastungsfähigkeit. Zusätzlich kann eine höhere Energieabsorption erzielt werden. Durch eine solche Ausgestaltung wird eine robuste, einfache und kostengünstige Konstruktion mit freier Materialauswahl ermöglicht.

In Figur 6a ist eine schematische Ansicht im Querschnitt und in Figur 6b eine schematische Ansicht im Längsschnitt einer weiteren alternativen Ausführungsform eines Rotationskörpers 41 dargestellt, welcher aus einem Außenrohr 74 und einem Innenrohr 75 ausgebildet ist. Dazwischenliegend ist ein Zwischenraum 76 ausgebildet, der wiederum mit einem Medium befüllbar ist. Zusätzlich kann das Innenrohr 75 mit einem Anschluss 72 versehen sein, um ebenfalls befüllt oder durchströmt zu werden. Bei diesem Ausführungsbeispiel ist ein feststehendes Innenrohr 75 und ein demgegenüber rotierendes Außenrohr 74 vorgesehen. Dadurch wird in dem Zwischenraum 76 ein stark bewegtes Medium erzeugt, wodurch eine verbesserte Wärmeübertragung erzielt wird. Die einander zugeordneten Flächenabschnitte des bewegten Außenrohres 74 und des stehenden Innenrohres 75 sind bevorzugt mit einer Dichtung versehen.

In Figur 7a ist eine schematische Ansicht im Querschnitt und in Figur 7b eine schematische Ansicht im Längsschnitt einer weiteren alternativen Ausführungsform eines Rotationskörpers 41 dargestellt. Bei dieser Ausführungsform ist wiederum ein Außenrohr 74 und ein Innenrohr 75 vorgesehen, wobei das innenliegende Rohr 75 ebenfalls rotiert. Dabei kann vorgesehen sein, dass das Innen- und Außenrohr 75, 74 in gleicher Drehrichtung und in gleicher Umfangsgeschwindigkeit angetrieben werden. Ebenso können zueinander abweichende Winkelgeschwindigkeiten vorgesehen sein als auch ein Antrieb in entgegengesetzte Richtungen erfolgen. Der Zwischenraum 76 ist bevorzugt mit Wasser befüllt und der Innenraum des Innenrohres 75 ist bevorzugt mit Luft befüllt.

In Figur 8 ist eine weitere alternative Ausgestaltung der Erfindung dargestellt. Der Rotationskörper 41 ist als Hohlwelle oder Rohr ausgebildet, in welche einseitig eine patronenförmig ausgebildete Kühleinheit 78 einsetzbar ist. Diese Kühleinheit 78 umfasst ein Außenrohr 81 und ein Innenrohr 82, wobei ein Zwischenraum 83 an einem Ende einen Zugang für das zugeführte Medium in einen Innenraum des Innenrohres 82 ermöglicht. Dadurch ist eine Zwangsführung des Medium gegeben. Diese Kühleinheit 78 wird in die Hohlwelle eingesteckt. Bevorzugt ist eine einseitige Lagerung bzw. eine sogenannte fliegende Lagerung vorgesehen.

## Patentansprüche

1. Strahlfangvorrichtung für eine Bearbeitungsmaschine mit einem Gehäuse (34), welche eine zum Schneidstrahl (24) weisende linienförmige Öffnung (31) aufweist und der beim Bearbeiten eines Werkstücks (17) aus der Unterseite des Werkstücks (17) austretende Schneidstrahl (24) durch die Öffnung (31) in das Gehäuse (34) eintritt und mit einem relativ zur Öffnung (31) des Gehäuses (34) bewegten festen Medium, das zur Energieabsorption den Schneidstrahl (24) kreuzt, **dadurch gekennzeichnet, dass** das bewegte Medium als Rotationskörper (41) ausgebildet ist und zumindest ein Rotationskörper (41) unterhalb der Öffnung (31) in dem Gehäuse (34) vorgesehen ist.

2. Strahlfangvorrichtung nach Anspruch 1, **dadurch gekennzeichnet, dass** der zumindest eine Rotationskörper (41) um seine Rotationsachse (48) zur Energieabsorption drehangetrieben ist oder dass der zumindest eine Rotationskörper (41) längs seiner Rotationsachse (48) zur Energieabsorption hin und her verfahrbar ist.

3. Strahlfangvorrichtung nach einem der vorhergehenden Ansprüche, **dadurch gekennzeichnet, dass** der Rotationskörper (41) als Walze ausgebildet ist, die sich vorzugsweise zumindest entlang der Länge der Öffnung (31) des Gehäuses (34) erstreckt.

4. Strahlfangvorrichtung nach Anspruch 1, **dadurch gekennzeichnet, dass** der zumindest eine Rotationskörper (41) außermittig zum Schneidstrahl (24) angeordnet ist, der durch die Öffnung (31) in das Gehäuse (34) eintritt.

5. Strahlfangvorrichtung nach Anspruch 1, **dadurch gekennzeichnet, dass** der zumindest eine Rotationskörper (41) in dem Gehäuse (34) in seiner außermittigen Position veränderbar und vorzugsweise zumindest in X-Richtung verfahrbar angeordnet ist.

6. Strahlfangvorrichtung nach einem der vorhergehenden Ansprüche, **dadurch gekennzeichnet, dass** der zumindest eine Rotationskörper (41) sich zumindest zu einer Stirnseite der Walze konisch verjüngt.

7. Strahlfangvorrichtung nach einem der vorhergehenden Ansprüche, **dadurch gekennzeichnet, dass** der Rotationskörper (41) als Walze aus einem Vollmaterial hergestellt ist oder dass der zumindest eine Rotationskörper (41) als Hohlwalze ausgebildet ist, die vorzugsweise an zumindest einer Stirnseite einen Anschluss (72) für die Zuführung eines Mediums in die Hohlwalze aufweist.

8. Strahlfangvorrichtung nach einem der Ansprüche 1 bis 6, **dadurch gekennzeichnet, dass** der zumindest eine Rotationskörper (41) als doppelwandige Walze ausgebildet ist, welche einen Zwischenraum (76) zwischen einem Außenrohr (74) und einem Innenrohr (75) bildet, der vorzugsweise mit einem Medium befüllbar ist und an zumindest einer Stirnseite des Innenrohres (75) ein Anschluss (72) für die Zuführung eines Mediums vorgesehen ist und insbesondere das Außenrohr (74) und das Innenrohr (75) relativ zueinander drehbar angeordnet sind.

9. Strahlfangvorrichtung nach Anspruch 1, **dadurch gekennzeichnet, dass** der Rotationskörper (41) als doppelwandige Walze ausgebildet ist und ein Innenrohr (75) außermittig zum Außenrohr (74) angeordnet ist.

10. Strahlfangvorrichtung nach einem der Ansprüche 1 bis 6, **dadurch gekennzeichnet, dass** der Rotationskörper (41) als Hohlwalze ausgebildet ist und eine doppelwandig ausgebildete, vorzugsweise einseitig gelagerte Kühleinheit (78) mit einer Zwangsführung eines Mediums in einem Innenraum der Hohlwalze einsetzbar ist.

11. Strahlfangvorrichtung nach Anspruch 1, **dadurch gekennzeichnet, dass** der Rotationskörper (41) aus einem gut wärmeleitenden Material, insbesondere aus Kupfer oder kupferhaltigen Materialien hergestellt ist.

12. Strahlfangvorrichtung nach Anspruch 1, **dadurch gekennzeichnet, dass** eine äußere Mantelfläche des Rotationskörpers (41) eine aufgeraute Oberfläche aufweist.

13. Strahlfangvorrichtung nach Anspruch 1, **dadurch gekennzeichnet, dass** zum Entfernen an dem zumindest einen Rotationskörper (41) anhaftender Schlacke, Funken und Verunreinigungen eine Reinigungsvorrichtung (65), die insbesondere als Bürsten oder rotierende Bürsten, als Schaber, als Kratzer oder rotierende Walzen ausgebildet ist, vorgesehen ist, welche vorzugsweise an einer äußeren Mantelfläche des Rotationskörpers (41) angreift.

14. Strahlfangvorrichtung nach Anspruch 1, **dadurch gekennzeichnet, dass** das Gehäuse (34) zumindest eine Absaugöffnung aufweist, die an eine Absaugvorrichtung anschließbar ist und zumindest eine Absaugöffnung seitlich im Wandabschnitt (51) oder am Boden (52) des Gehäuses (34) vorgesehen ist und dass zwischen der Öffnung (31) des Gehäuses (34) und dem Rotationskörper (41) eine Zuführung (57) vorgesehen ist, welche vorzugsweise eine Einströmrichtung aufweist, die quer zur Längserstreckung des zumindest einen Rotationskörpers (41) oder der Öffnung (31) des Gehäuses (34) ausgerichtet ist, die insbesondere sich zumindest abschnittsweise entlang dem Gehäuse (34) erstreckt und zum Einleiten des Mediums segmentweise ansteuerbar ist oder in Abhängigkeit der Position des in die Öffnung (31) des Gehäuses (34) eintretenden Schneidstrahls (24) zuschaltbar ist.

15. Strahlfangvorrichtung nach Anspruch 1, **dadurch gekennzeichnet, dass** zumindest seitliche Wandabschnitte (51) des Gehäuses (34) eine Anti-Haftbeschichtung aufweist.

## Claims

1. A beam capturing device for a processing machine, having a housing (34) provided with a line-like opening (31) facing toward the cutting beam (24), the cutting beam (24) exiting from the bottom surface of a workpiece (17) as the workpiece (17) is being processed entering the housing (34) through said opening (31), and further having a solid medium that is moved relative to the opening (31) of the housing (34) and crosses the cutting beam (24) for the purpose of energy absorption, **characterised in that** the moved medium is realised as a rotating body (41) and at least one rotating body (41) is provided beneath the opening (31) in the housing (34).

2. The beam capturing device as claimed in claim 1, **characterised in that** for the purpose of energy absorption the at least one rotating body (41) is rotationally driven about its axis of rotation (48) or that for the purpose of energy absorption the at least one rotating body (41) is movable in both directions along its axis of rotation (48).

3. The beam capturing device as claimed in any of the preceding claims, **characterised in that** the rotating body (41) is realised as a roller that preferably extends along the length of the opening (31) of the housing (34).

4. The beam capturing device as claimed in claim 1, **characterised in that** the at least one rotating body (41) is disposed off-centre with respect to the cutting beam (24) entering the housing (34) through the opening (31).

5. The beam capturing device as claimed in claim 1, **characterised in that** the at least one rotating body (41) is variable within the housing (34) in its off-centre position and is preferably disposed in such a manner as to be movable at least in the x-direction.

6. The beam capturing device as claimed in any of the preceding claims, **characterised in that** the at least one rotating body (41) is conically tapered toward at least one end face of the roller.

7. The beam capturing device as claimed in any of the preceding claims, **characterised in that** the rotating body (41) is fabricated as a roller realised as a solid piece or that the at least one rotating body (41) is realised as a hollow roller which is preferably provided, on at least one end face, with a feeding appliance (72) for supplying a medium to the hollow roller.

8. The beam capturing device as claimed in any of the claims 1 to 6, **characterised in that** the at least one rotating body (41) is realised as a double-walled roller defining a space (76) between an outer tube (74) and an inner tube (75) which may preferably be filled with a medium and that at least one end face of the inner tube (75) is provided with an inlet port (72) for feeding a medium and in particular the outer tube (74) and the inner tube (75) are arranged in a rotatable manner with respect to each other.

9. The beam capturing device as claimed in claim 1, **characterised in that** the rotating body (41) is realised as a double-walled roller and an inner tube (75) is disposed off-centre with respect to the outer tube (74).

10. The beam capturing device as claimed in any of the claims 1 to 6, **characterised in that** the rotating body (41) is realised as a hollow roller and a cooling unit (78) formed with double walls and realising a forced circulation of a medium is insertable into an interior space of the hollow roller.

11. The beam capturing device as claimed in claim 1, **characterised in that** the rotating body (41) is fabricated from a material having a good thermal conductivity, in particular from copper or from materials containing copper.

12. The beam capturing device as claimed in claim 1, **characterised in that** an outer lateral area of the rotating body (41) has a roughened surface.

13. The beam capturing device as claimed in claim 1, **characterised in that** a cleaning device (65) is provided for removing slag, sparks, and contaminants adhering to the at least one rotating body (41), said cleaning device (65) is realised, in particular as brushes or rotating brushes, as a scraper, a scratcher, or as rotating rollers, which is preferably acting on an outer lateral area of the rotating body (41).

14. The beam capturing device as claimed in claim 1, **characterised in that** the housing (34) has at least one suction opening which is connectable to a suction device, that at least one suction opening is provided laterally in the wall portion (51) or on the bottom (52) of the housing (34), and that between the opening (31) of the housing (34) and the rotating body (41) a feeding appliance (57) is provided which preferably has an inflow direction that is oriented perpendicular to the longitudinal extension of the at least one rotating body (41) or to the opening (31) of the housing (34), which in particular extends at least portion-wise along the housing (34) and, for introducing the medium, may be activated segmentwise or is capable of being switched in depending on the position of the cutting beam (24) entering the housing (34) through the opening (31).

15. The beam capturing device as claimed in claim 1, **characterised in that** at least lateral wall portions (51) of the housing (34) are provided with a non-adhesion coating.

## Revendications

1. Dispositif de capture de jet pour une machine d'usinage avec un carter (34) lequel dispositif présente une ouverture (31) en forme de ligne orientée vers le jet de coupe (24), le jet de coupe (24) qui sort de la partie inférieure de la pièce à usiner (17) lors de l'usinage d'une pièce à usiner (17) pénètrant dans le carter (34) par l'ouverture (31), et avec un milieu solide mobile par rapport à l'ouverture (31) du carter (34) qui croise le jet de coupe (24) pour en absorber l'énergie, **caractérisé en ce que** le milieu mobile est réalisé en tant que corps rotatif (41) et **en ce qu'**il est prévu au moins un corps rotatif (41) au-dessous de l'ouverture (31) ménagée dans le carter (34).

2. Dispositif de capture de jet selon la revendication 1, **caractérisé en ce que** ledit au moins un corps rotatif (41) est, en vue d'absorber de l'énergie, entraîné de manière à tourner sur son axe de rotation (48) ou **en ce que** ledit au moins un corps rotatif (41) est, en vue d'absorber de l'énergie, déplaçable dans un mouvement de va-et-vient le long de son axe de rotation (48).

3. Dispositif de capture de jet selon l'une quelconque des revendications précédentes, **caractérisé en ce que** le corps rotatif (41) est réalisé en tant que cylindre qui s'étend de préférence au moins le long de la longueur de l'ouverture (31) du carter (34).

4. Dispositif de capture de jet selon la revendication 1, **caractérisé en ce que** ledit au moins un corps rotatif (41) est disposé de manière excentrée par rapport au jet de coupe (24) qui pénètre dans le carter (34) par l'ouverture (31).

5. Dispositif de capture de jet selon la revendication 1, **caractérisé en ce que** ledit au moins corps rotatif (41) est disposé dans le carter (34) de manière à ce que sa position excentrée puisse être modifiée et de préférence puisse être déplacée au moins en direction x.

6. Dispositif de capture de jet selon l'une quelconque des revendications précédentes, **caractérisé en ce que** ledit au moins un corps rotatif (41) s'amincit de manière conique au moins vers une face frontale du cylindre.

7. Dispositif de capture de jet selon l'une quelconque des revendications précédentes, **caractérisé en ce que** le corps rotatif (41) est fabriqué en tant que cylindre dans un matériau massif ou **en ce que** ledit au moins un corps rotatif (41) est réalisé en tant que cylindre creux qui présente de préférence sur au moins une face frontale un raccord (72) servant à amener un milieu dans le cylindre creux.

8. Dispositif de capture de jet selon l'une quelconque des revendications 1 à 6, **caractérisé en ce que** ledit au moins un corps rotatif (41) est réalisé en tant que cylindre à double paroi qui forme un espace (76) entre un tube extérieur (74) et un tube intérieur (75) qui peut être de préférence rempli par un milieu, et qu'un raccord (72) servant à amener un milieu est prévu sur au moins une face frontale du tube intérieur (75) et que notamment le tube extérieur (74) et le tube intérieur (75) sont disposés de manière à pourvoir tourner l'un par rapport à l'autre.

9. Dispositif de capture de jet selon la revendication 1, **caractérisé en ce que** le corps rotatif (41) est réalisé en tant que cylindre à double paroi et qu'un tube intérieur (75) est disposé de manière excentrée par rapport au tube extérieur (74).

10. Dispositif de capture de jet selon l'une quelconque des revendications 1 à 6, **caractérisé en ce que** le corps rotatif (41) est réalisé en tant que cylindre creux et **en ce qu'**une unité de refroidissement (78) à double paroi, de préférence montée unilatéralement et pourvue d'un amenage forcé d'un milieu peut être placée dans un espace intérieur du cylindre creux.

11. Dispositif de capture de jet selon la revendication 1, **caractérisé en ce que** le corps rotatif (41) est fabriqué en un matériau présentant une bonne conductibilité thermique, notamment en cuivre ou en matériaux cuprifères.

12. Dispositif de capture de jet selon la revendication 1, **caractérisé en ce qu'**une surface latérale extérieure du corps rotatif (41) présente une surface rugueuse.

13. Dispositif de capture de jet selon la revendication 1, **caractérisé en ce qu'**il est prévu, en vue d'éliminer de la crasse, des étincelles et des impuretés adhérant audit au moins un corps rotatif (41), un dispositif de nettoyage (65), réalisé notamment en tant que brosses ou brosses rotatives, en tant que grattoirs, racloirs ou cylindres rotatifs, lequel agit de préférence sur une surface latérale extérieure du corps rotatif (41).

14. Dispositif de capture de jet selon la revendication 1, **caractérisé en ce que** le carter (34) présente au moins un orifice d'aspiration qui peut être raccordé à un dispositif d'aspiration et qu'au moins un orifice d'aspiration est prévu latéralement dans la partie de paroi (51) ou dans le fond (52) du carter (34), et **en ce qu'**entre l'ouverture (31) du carter (34) et le corps rotatif (41) est prévue une amenée (57) qui présente de préférence un sens d'admission orienté transversalement à l'extension longitudinale dudit au moins un corps rotatif (41) ou à l'ouverture (31) du carter (34) et qui s'étend notamment au moins partiellement le long du carter (34) et qui, en vue de l'introduction du milieu, peut être activée segment par segment ou qui peut être connectée en fonction de la position du jet de coupe (24) lorsque celui-ci pénètre dans l'ouverture (31) du carter (34).

15. Dispositif de capture de jet selon la revendication 1, **caractérisé en ce qu'**au moins des parties de paroi latérales (51) du carter (34) présentent un revêtement antiadhésif.
